# EUROPEAN PATENT SPECIFICATION

(11) **EP 0 376 405 B1**
(45) Date of publication and mention of the grant of the patent: **10.11.1993**
(21) Application number: 89203322.6
(22) Date of filing: 22.12.1989
(51) Int. Cl.: B29D 30/32

(54) **Apparatus for positioning beads for a pneumatic tire**
Vorrichtung zum Positionieren von Reifenwülsten
Dispositif de positionnement des tringles d'un pneumatique

(30) Priority: 27.12.1988 NL 8803174
(43) Date of publication of application: 04.07.1990
(73) Proprietor: VMI EPE HOLLAND B.V., NL-8161 RK Epe (NL)
(72) Inventor: Bierens, Franciscus Cornelis, 8162 ZS Epe (NL)
(74) Representative: Kooy, Leendert Willem

(56) References cited:
- DE-A- 1 925 304
- DE-A- 3 509 025
- DE-B- 1 016 924
- DE-B- 1 180 515
- FR-A- 2 145 841
- US-A- 4 430 143

## Description

The invention relates to an apparatus for positioning two beads on a building drum for a pneumatic tire, comprising a loading device, two positioning units and a transfer track, said loading device being provided for receiving the beads and for subsequently moving the beads to the positioning units, as well as for substantially simultaneously loading the beads onto said positioning units, said positioning units being provided for transferring the beads coaxially to the building drum along the transfer track to a correct position with respect to a package of liner and carcass plies on the building drum, and for subsequently releasing the beads onto said package.

In order to manufacture a pneumatic tire, a package of belt plies and tread is arranged on a belt drum and subsequently transferred by a transfer ring along a transfer track to a carcass drum, on which previously a package of innerliner and carcass plies has been arranged. Around said package of liner and carcass plies, thus obtained, beads should be positioned in the correct positions and concentrically around said package, after which the pneumatic tire will be completed by further operations. For a good understanding of the invention, a discussion of the nature of these further operations is superfluous, and for simplicity's sake it is omitted.

An apparatus for positioning two beads on a building drum for a pneumatic tire as described in the opening paragraph, is known from DE-A-19 25 304. In this known apparatus, a frame comprises two posts. A building drum is supported by one post and an arm is rotatably supported by the other post. The rotatable arm comprises a loading device on each of its ends and is in normal position coaxial with the building drum. The known apparatus furthermore comprises positioning units for taking beads from the loading device closest to the building drum and transferring the beads coaxially to the building drum to a correct position on the building drum.

It is one of the objects of the present invention to provide as an alternative to the known apparatus, an apparatus for positioning two beads onto the above-described package of plies on the building drum in the correct position and concentrically with respect to said package.

Another object of the present invention is an apparatus with which the positioning of the beads takes place substantially mechanically, because of which not only the operator's time is saved, but also the beads are mechanically positioned in the correct positions, so that incorrect manipulations and judgements of the operator are avoided. With the invented apparatus, the operator will be able to carry out other manipulations during the operation of the invented apparatus, as e.g. at the belt drum or the carcass drum on behalf of the manufacture of the next pneumatic tire. Moreover, the beads are positioned at the right moment in the building scheme for pneumatic tires, resulting in that unnecessarily waiting is avoided, with increased output of the entire machinery for the manufacture of pneumatic tires as a result. Also, the beads are positioned into a more accurate coaxial position to the center line of the building drum, which is favourable for the quality of the pneumatic tire. Another advantage of the invented apparatus is that it comprises quickly exchangeable parts, so that the apparatus can be quickly provided with similar parts but of different diameter in order to be ready for manufacturing a different size of pneumatic tire.

These objects are obtained in that an apparatus of the kind mentioned in the opening paragraph is in accordance with the present invention characterized in that the loading device comprises a pivotable jib on which two carriers for carrying the beads are mounted, said carriers being resiliently displaceable with respect to the jib, from a receiving position to a loading position, said jib being pivotable to a position in which the center line of the bead carried by the carrier coincides with that of the positioning units, and in that each of the two positioning units comprises two pivotable arms each mounted on a respective lever, said arms defining in their mutually closed positions a complete circle of which the center point is on the center line of the building drum, said arms being pivotable away from said closed position and back again by means of drive means, each arm comprising magnets for carrying a bead.

With this construction each of the two positioning units can be provided with two arms that in their mutually closed positions define a portion of a circle of which the center point is on the center line of the building drum, said arms being pivotable away from said closed position and back again by means of drive motors, each arm comprising magnets for carrying a bead.

A preferred embodiment of the invention is characterized in that each of the two positioning units comprises a carriage movably supported on the transfer track, said track extending parallel to the center line of the building drum, and in that drive motors with electronic control equipment are present for moving each positioning unit to its correct position.

The above-stated bead is understood to comprise an annular bundle of steel wires and a filling strip of rubber, if mounted on said bundle.

The invention will be further explained in the following description of an example of an embodiment as shown in the enclosed drawing. It is clear that constructive variations in said example of an embodiment are easily conceivable to an expert, as e.g. different drive means. Such variations, which are obvious to an expert, are emphatically included in the scope of the invented apparatus, as indicated in the claims.

In the drawing;
figure 1 is a schematical side-view of an embodiment of the invented apparatus and of the building drum to which beads should be delivered by the invented apparatus.
Figure 2 is a schematical view perpendicular to the surface of figure 1, in which the apparatus is shown from the right in figure 1.
Figure 3 is a schematic side-view and partial cross-section of an embodiment of a carrier for beads according to the invention;
Figure 4 is a schematic view perpendicular to the surface of figure 3, the cross-section in figure 3 extending along the line III-III.

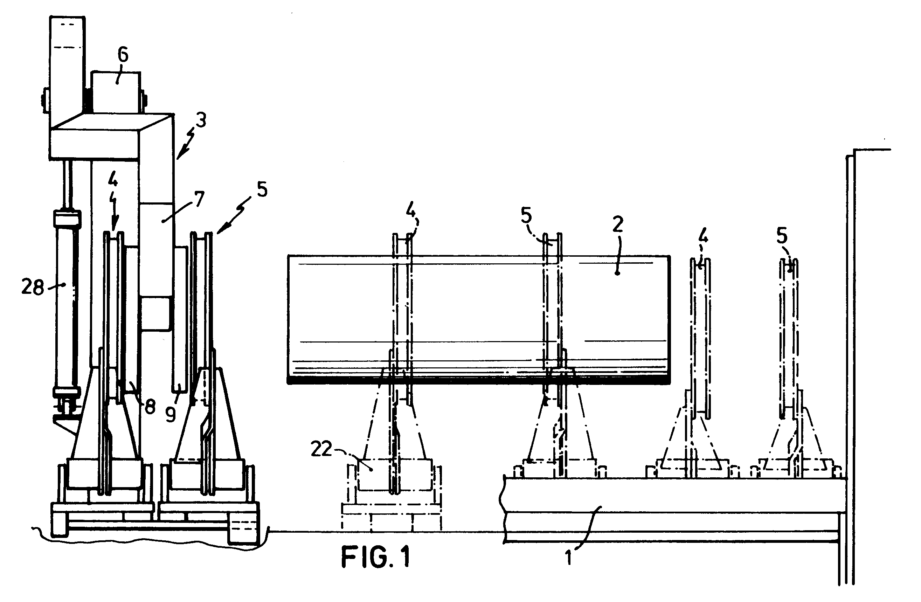

Figure 1 shows a schematic side-view of a device for building a pneumatic tire. In this device, a transfer track 1 extends between a belt building unit (not shown) at the left end of the transfer track shown in figure 1, and a carcass building unit (not shown completely) at the right end of the transfer track shown in figure 1. A package of belt plies is arranged on the belt building unit and subsequently provided with a tread, after which all this is transferred by a transfer unit (not shown) along the transfer track 1 to, and positioned around, a previously arranged package of inside liner plies and carcass plies with beads located around said package, the latter being arranged on the carcass drum. As said belt building unit, said transfer unit and said carcass building unit are generally known, they will not be discussed in this description or shown in the drawings.

It is also known that two beads should be positioned concentrically around and accurately with respect to the inside liner plies and the carcass plies on the building drum. Each of said beads is composed of an annular bundle of steel bead wires and, if desired, of a filling strip of rubber, mounted on said bundle. As such a bead is known, it will not be further discussed here and it will not be further shown in the drawings.

The invention relates to a loading device 3 and a left positioning unit 4 plus a right positioning unit 5, of which an embodiment, shown in the drawing, will be discussed below.

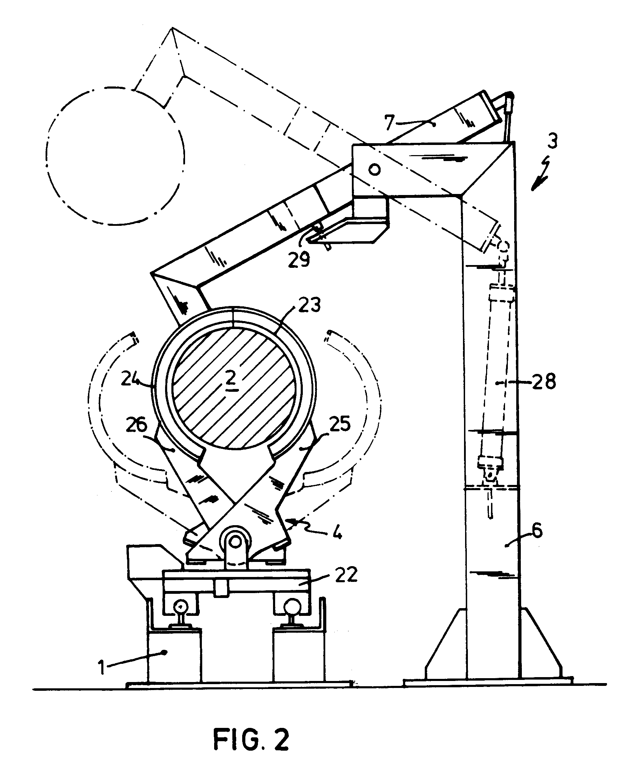

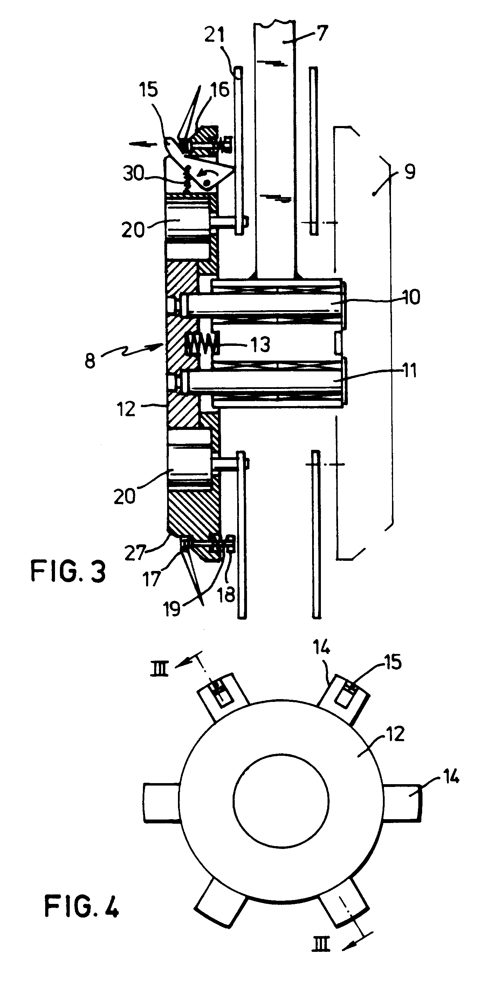

As shown in figure 2, the invented loading device 3 comprises a leg 6 with a jib 7 pivotably mounted thereon. According to figure 3, a left carrier 8 and a right carrier 9 are each mounted on one of both sides of the jib 7. As, according to figure 3, both carriers are each other's mirror immage, only the left carrier, as shown in cross-section in figure 3, will be discussed here. Two carrier pins 10 and 11 are mounted on the jib 7, and, if desired, may be rotatable in bearings. As shown in figure 3 a carrier element 12 is disposed on and movably to the right along the carrier pins, a spring 13 pushing said carrier element to the left with respect to the jib 7.

According to figure 4, the carrier element 12 comprises centering cams 14, the number of which can be adapted to e.g. the diameter of the bead, although figure 4 shows six centering cams. By replacing the centering cams 14 with centering cams of a different size, the combination of carrier element 12 and centering cams is easily and quickly adaptable to a different diameter of the bead. Each of the two most elevated centering cams, shown in figure 4, is provided with a hook 15, which is pivotable to a more horizontal position from the position shown in figure 3. Between each of the two hooks and the adjacent inclined end 16 of the cam 14 in question, a bead 17 can be hanged by hand.

Furthermore, each centering cam 14 according to figure 3 comprises a pushing pin 18 which is biassed inwards by a spring 19 to its retracted position shown in figure 3. A control member 21 can be moved to the left by for instance a cylinder-piston unit 20 as shown in figure 3, resulting in that the hook 15 is pivoted to its horizontal position, opposing the force of a spring 30, and resulting in that the pushing pin 18 is also pushed to the left. The hook 15, being pivoted in its horizontal position, clears the way for the bead 17 during its being pushed to the left by the pushing pin 18. These operations take place simultaneously at both centering cams with hooks 15 and at all centering cams having pushing pins 18, so that the complete bead is pushed to the left in figure 3, i.e. until it abuts the positioning unit 4 shown in figure 1, as will be set forth in the following paragraphs.

The invented positioning units 4 and 5 form each other's mirror immage, so that a discussion of positioning unit 4 will be sufficient. The positioning unit comprises a carriage 22, which is movable along the transfer track 1, by a motor. Said motor is controlled by electronic control equipment, and causes rotation of a screw spindle. A nut mounted on said carriage engages the screw spindle. The motor and the control equipment can easily be designed by an expert and they can be known per se, so that a further discussion is superfluous here.

As shown in figure 2, each positioning unit 4 or 5 comprises two arms 23 and 24 which in their mutually closed positions, anyway at their inside, define at least the greater portion of a circle. Each arm 23, 24 is mounted on its own lever 25, 26, respectively, both levers being pivotably mounted on said carriage 22. The arms 23 and 24 are pivotable to the open positions, shown by dotted lines in figure 2, and back again to their mutually closed positions by drive means, which are known per se and therefore not shown, such as a piston-cylinder unit or a nut on a screw spindle, rotatable by a motor for each arm.

Each arm 23, 24 carries magnets (not shown) for engaging a bead. The height of the arms is adjustable with respect to the carriage 22, so that the center line of the arms, in their mutually closed positions, coincides with the center line of the building drum 2.

The operation of the invented apparatus will now be described. A person is present for controlling the entire machinery, which comprises the invented apparatus plus the belt and tread building unit, the carcass building unit and the transfer unit (said three units are not shown, as they do not form a part of the invention).

Said operator takes two beads from a stock and hangs a bead onto each carrier 8, 9, respectively, as shown in figure 3, after which the bead 17 is stopped from dropping from the said carrier by hooks 15 in their upwardly pivoted position shown in figure 3. The inclined edge 16 on each of the centering cams 14 of the carrier 8, 9 respectively, facilitates the concentric positioning of the bead on the carrier 8 according to figure 3.

Subsequently, the jib 7 is pivoted by the drive motor 28 from the position shown by dotted lines in figure 2, to the position shown by full lines according to figure 1 and 2, i.e. to the position in which the center lines of the carriers 8 and 9 are positioned coaxially to the center line of the building drum 2 as shown in figure 1. In order to accurately achieve said coaxial positioning of the center lines of the carriers 8 and 9 with the center line of the building drum 2, the leg 6 is provided with an adjustable buffer 29. The above-mentioned drive motor 28 can be a cylinder-piston unit, but also a different kind of motor is possible. The motor 28 is controllable by an electronic control equipment which can easily be designed by an expert and therefore will not be discussed any further here.

Hereafter the two positioning units 4 and 5 are moved from the (not shown) positions at the left and the right of the loading device 3 into the positions shown by full lines in figure 1, along the transfer track 1 which is partly shown in figure 1. During this movement, the two arms 23 and 24 of each of the two positioning units are pivoted into their mutually closed position, as indicated by full lines in figure 2.

In order to be sure that each of the two arms 23 and 24 of each positioning unit 4 and 5 firmly abuts the bead 17 on each of the carriers 8 and 9 when the positioning units 4 and 5 and the carriers 8 and 9 are in their positions shown by full lines in figure 1, the positioning units are moved to such an extent, that the arms, via the beads, somewhat bias the carriers along the carrying pins 10 and 11 towards the jib 7 counter the force of the spring 13. Thereby magnets (not shown), mounted on each of the two arms 23 and 24, are pushed against the bead 17, which by means of its bundle of steel bead wires is engaged by the magnets on the two arms.

Subsequently, the control members 21 in figure 3 are moved to the left by the cylinder-piston units 20, with as a result that the hook 15 in each of the two most elevated cams 14 (figure 4) is pivoted towards a more horizontal position counter the force of the spring 30, so that the bead 17 is released in order to be transferred away by the positioning unit 4 (5, respectively). Moreover, as shown in figure 3, the pushing pins 18 are moved counter their corresponding springs 19, due to said moving of the control members 21, so that said pushing pins push the bead 17 away from the carrier 8 (9, respectively) towards the arms 23 and 24 of the positioning unit 4 (5, respectively). Simultaneously, the above-stated also occurs with the carrier 9, since said carrier and the carrier 8 as shown in figure 3 are each other's mirror immage.

After this, the positioning units 4 and 5, each now carrying a bead 17, are moved away from the carrier 8, 9, respectively, by their above-mentioned electronically controlled displacement mechanisms along the transfer track 1.

Next, the jib 7 with the carriers 8 and 9 thereon is pivoted by the cylinder-piston unit 28 from the position shown by full lines in figure 2, to the position indicated by dotted lines. At a distinct moment in the building cycle, the positioning units 4 and 5 are transferred by their displacement mechanisms along the transfer track 1 to their positions shown by dotted lines in the middle of figure 1, in which the arms 23 and 24, being in their positions shown by full lines in figure 2, coaxially extend around the building drum 2. The displacement mechanisms are preferably controlled by electronic controllers, so that each positioning unit carrying its bead is moved to the correct axial position with respect to the package of liner and carcass plies positioned on the building drum 2. Displacement mechanisms, controlled by electronic controllers, are known per se from the many applications in the art, and therefore they are not further discussed and drawn here.

The positioning units 4 and 5 being now in the correct positions (indicated by dotted lines in the middle of figure 1), the building drum 2 is expanded until the beads are firmly clamped onto the plies around said building drum, i.e. around the inside liner plies and the carcass plies. Subsequently, the arms 23 and 24 of each positioning unit are pivoted from the position shown by full lines in figure 2 towards the position indicated by dotted lines, leaving the beads behind, and said beads, together with the plies on the building drum, will be processed further in the usual way, so as to create a pneumatic tire. Units on the carriage 22 for pivoting the arms 23 and 24 are already discussed herein.

After the arms 23 and 24 have been pivoted away from each other, the positioning units 4 and 5 are transferred by the discussed displacement mechanisms along the transfer track 1, into the positions indicated by dotted lines at the right in figure 1. Here-after, the beads, tread and carcass plies, positioned on the building drum, are available for a further processing into a pneumatic tire. Finally, the positioning units 4 and 5 are transferred by said discussed displacement mechanisms to the positions indicated by full lines at the left in figure 1, so that the above-described working cycle can be executed again from its beginning for the manufacture of a next pneumatic tire.

The advantages of the invented apparatus and the way it works, can be found in the above description.
1. Merely the hanging of the beads 17 onto the hooks 15 occurs by hand, after which at least most, and preferrably all subsequent operations take place mechanically and automatically, so that the operator, during said mechanical operations, is available for other operations, that are necessary for the manufacture of a pneumatic tire. The hanging of the beads by hand can take place e.g. during the occurence of mechanical operations to a preceding pneumatic tire;
2. The positioning of the beads on the building drum 2 takes place at the right moment within the series of phases for manufacturing a pneumatic tire, resulting in that waiting is avoided;
3. Axially seen, the beads are accurately positioned in the correct positions on the carcass plies around the building drum, so that differences due to human acting cannot occur;
4. Moreover, the beads are disposed absolutely coaxially to the center line of the building drum 2;
5. Members of the carriers 8 and 9, and the arms 23 and 24 are quickly exchangeable for similar members, having different sizes, so that subsequently the apparatus can be used for the manufacture of a pneumatic tire of a different diameter.

## Claims

1. Apparatus for positioning two beads (17) on a building drum (2) for a pneumatic tire, comprising a loading device (3), two positioning units (4, 5) and a transfer track (1), said loading device (3) being provided for receiving the beads (17) and for subsequently moving the beads (17) to the positioning units (4, 5), as well as for substantially simultaneously loading the beads (17) onto said positioning units (4, 5), said positioning units (4, 5) being provided for transferring the beads (17) coaxially to the building drum (2) along the transfer track (1) to a correct position with respect to a package of liner and carcass plies on the building drum (92), and for subsequently releasing the beads (17) on the package, **characterized in that** the loading device (3) comprises a pivotable jib (7) on which two carriers (8, 9) for carrying the beads (17) are mounted, said carriers (8, 9) being resiliently displaceable with respect to the jib (7), from a receiving position to a loading position, said jib (7) being pivotable to a position in which the center line of the bead (17) carried by the carrier (8, 9) coincides with that of the positioning (4, 5), and in that each of the two positioning units (4, 5) comprises two pivotable arms (23, 24) each mounted on a respective lever (25, 26), said arms (23, 24) defining in their mutually closed positions a complete circle of which the center point is on the center line of the building drum (2), said arms being pivotable away from said closed position and back again by means of drive means, each arm (23, 24) comprising magnets for carrying a bead (17).

2. Apparatus according to claim 1, **characterized in that** the loading device (3) comprises a leg (6) for supporting the jib (7), a drive means (28) and a adjustable buffer (29) for pivoting the jib (7) to a position adjustable by means of the buffer (29), in which the center line of the bead (17) carried by the carrier (8, 9) coincides with that of the building drum (2).

3. Apparatus according to claim 1 or 2, **characterized in that** each of two positioning units (4, 5) comprises a carriage (22) movably supported on the transfer track (1), said track (1) extending parallel to the center line of the building drum (2), and in that drive motors with electronic control equipment are present for moving each positioning unit (4, 5) with respect to the building drum (2).

4. Apparatus according to claim 1, **characterized in that** the two arms (23, 24) on each positioning unit (4, 5) are exchangeable for arms with a different arc radius.

5. Apparatus according to one of the preceding claims, **characterized in that** each carrier (8, 9) is provided with at least two hooks (15) for hanging beads thereon in the receiving position, with pushing pins (18) for pushing the bead (17) towards and against the positioning unit (4, 5) in question, and with a drive motor for pivoting the hooks (15) to a position in which the bead (17) is released and for simultaneously pushing the pushing pins (18) with the beads (17) towards the positioning unit (4, 5) in question.

6. Apparatus according to claim 5, **characterized in that** each carrier (8, 9) comprises a carrier element (12) and a number of centering cams (14) on which the pushing pins (18) are mounted, at least two of the most elevated centering cams (14) comprising said pivotable hooks (15).

7. Apparatus according to claim 6, **characterized in that** the centering cams (14) are mounted on the carrier element (12) in such a manner that they can be exchanged for centering cams (14) of a different size in order to adapt them to the diameter of the bead (17).

8. Apparatus according to one of the preceding claims, **characterized in that**, after the beads (17) have been positioned on the building drum (2), free access from one side to the transfer track (1) is possible as a result of the jib (7) being in its highest position and both carriages (22) with carriers (8, 9) and positioning units (4, 5) being situated in the utmost position on the transfer track (1) opposite said side.

## Patentansprüche

1. Vorrichtung zum Positionieren von zwei Reifenwülsten (17) auf einer Konfektioniertrommel (2) mit einer Ladeeinrichtung (3), zwei Positioniereinheiten (4, 5) und einer Transportbahn (1), wobei die Ladeeinrichtung (3) die Wülste (17) aufnimmt und sie danach zu den Positioniereinheiten (4, 5) befördert und im wesentlichen gleichzeitig die Wülste (17) auf den Positioniereinheiten (4, 5) lädt, welche Positioniereinheiten (4, 5) die Wülste (17) koaxial zur Konfektioniertrommel (2) auf der Transportbahn (1) korrekt zu einem Paket von Futter- und Karkassenlagen auf der Konfektioniertrommel (2) transportieren und anschließend die Wülste (17) auf dem Paket freigeben, **dadurch gekennzeichnet, daß** die Ladeeinrichtung (3) einen schwenkbaren Ausleger (7) umfaßt, auf dem zwei Halterungen (8, 9) befestigt sind, die zum Ausleger (7) federnd aus einer Aufnahmeposition in eine Ladeposition verschoben werden können, und der in eine Position geschwenkt werden kann, in der die Mittellinie der Wulst (17), die durch die Halterung (8, 9) gehalten wird, mit der Mittellinie der Positioniereinheiten (4, 5) übereinstimmt, und dadurch, daß die beiden Positioniereinheiten (4, 5) je zwei schwenkbare Arme (23, 24) umfassen, die jeweils auf einem dazugehörigen Hebel (25, 26) befestigt sind, wobei die Arme (23, 24) in der zueinander geschlossenen Position einen vollen Kreis begrenzen, dessen Mittelpunkt auf der Mittellinie der Konfektioniertrommel (2) liegt, sie durch Antriebsvorrichtungen aus der geschlossenen Position heraus- und wieder in sie zurückgeschwenkt werden können und jeder Arm (23, 24) Magnete zum Halten einer Wulst (17) aufweist.

2. Vorrichtung nach Anspruch 1, **dadurch gekennzeichnet, daß** die Ladeeinrichtung (3) versehen ist mit einem Schenkel (6) zum Halten des Auslegers (7), einer Antriebsvorrichtung (28) und einem einstellbaren Puffer (29) zum Schwenken des Auslegers (7) in eine durch den Puffer (29) einstellbare Position, in der die Mittellinie der Wulst (17) in der Halterung (8, 9) mit der Mittellinie der Konfektioniertrommel (2) übereinstimmt.

3. Vorrichtung nach Anspruch 1 oder 2, **dadurch gekennzeichnet, daß** jede der beiden Positioniereinheiten (4, 5) einen Schlitten (22) umfaßt, der beweglich auf der Transportbahn (1) angebracht ist, wobei die Bahn (1) parallel zur Mittellinie der Konfektioniertrommel (2) verläuft, und daß Antriebsmotoren mit elektronischer Steuerung zum Bewegen jeder Positioniereinheit (4, 5) gegenüber der Konfektioniertrommel (2) vorhanden sind.

4. Vorrichtung nach Anspruch 1, **dadurch gekennzeichnet, daß** die beiden Arme (23, 24) auf jeder Positioniereinheit (4, 5) durch Arme mit einem anderen Bogenradius ausgetauscht werden können.

5. Vorrichtung nach einem der vorangegangenen Ansprüche, **dadurch gekennzeichnet, daß** jede Halterung (8, 9) mindestens zwei Haken (15) zum Einhängen von Wülsten in Aufnahmeposition mit Andruckstiften (18) zum Andrücken der Wulst (17) in Richtung und gegen die betreffende Positioniereinheit (4, 5) und einen Antriebsmotor aufweist, der die Haken (15) in eine Position schwenkt, in der die Wulst (17) losgelassen wird, und der gleichzeitig die Andruckstifte (18) mit den Wülsten (17) an die betreffende Positioniereinheit (4, 5) andrückt.

6. Vorrichtung nach Anspruch 5, **dadurch gekennzeichnet, daß** jede Halterung (8, 9) ein Halteelement (12) und eine Reihe von Zentriernocken (14) umfaßt, auf denen die Andruckstifte (18) befestigt sind, wobei mindestens zwei der höchsten Zentriernocken (14) schwenkbare Haken (15) umfassen.

7. Vorrichtung nach Anspruch 6, **dadurch gekennzeichnet, daß** die Zentriernocken (14) so auf dem Halteelement (12) befestigt sind, daß sie durch Zentriernocken (14) einer anderen Größe ausgetauscht werden können, um sie dem Durchmesser der Wulst (17) anzupassen.

8. Vorrichtung nach einem der vorangegangenen Ansprüche, **dadurch gekennzeichnet, daß** nach dem Positionieren der Wülste (17) auf der Konfektioniertrommel (2) von einer Seite ein freier Zugang zur Transportbahn (1) möglich ist, da sich der Ausleger (7) in seiner höchste Position und sich beide Schlitten (22) mit den Halterungen (8, 9) und den Positioniereinheiten (4, 5) an der äußersten Stelle auf der Transportbahn (1) gegenüber dieser Seite befinden.

## Revendications

1. Appareil pour positionner deux talons (17) sur un tambour de construction (2) d'un pneumatique, comprenant un dispositif de chargement (3), deux unités de positionnement (4, 5) et une piste de transfert (1), le dispositif de chargement (3) étant prévu pour recevoir les talons (17) et pour ensuite déplacer les talons (17) aux unités de positionnement (4, 5) ainsi que pour opérer pratiquement simultanément le chargement des talons (17) sur lesdites unités de positionnement (4, 5), lesdites unités de positionnement (4, 5) étant prévues pour transférer les talons (17) coaxialement par rapport au tambour de construction (2), sur la piste de transfert (1), en une position correcte par rapport à un paquet de nappes de revêtements et de carcasses sur le tambour de construction (92) et pour ensuite relâcher les talons (17) sut te paquet, caractérisé en ce que le dispositif de chargement (3) comprend un bras en porte-à-faux pivotant (7), sur lequel sont montés deux supports (8, 9), pour porter les talons (17), lesdits supports (8, 9) étant déplaçables de façon élastique par rapport au bras en porte-à-faux (7), depuis une position de réception jusqu'à une position de chargement, le dit bras en porte-à-faux (7) étant susceptible de pivoter en une position dans laquelle l'axe du talon (17) portée par le support (8, 9) coïncide avec celui de l'unité de positionnement (4, 5) et en ce que chacune des deux unités de position (4, 5) comprend deux bras pivotant (23, 24) montés chacun sur un levier (25, 26) respectif, lesdits bras (24, 25) définissant, dans leurs positions mutuellement rapprochée, un cercle complet dont le centre est situé sur l'axe du tambour de construction (2), lesdits bras étant susceptible de pivoter pour s'écarter ou se rapprocher de ladite position proche et inversement, à l'aide de moyens d'entraînement, chaque bras (23, 24) comprenant des aimants pour porter un talon (17).

2. Appareil selon la revendication 1, caractérisé en ce que le dispositif de chargement (3) comprend un pied (6) destiné à supporter le bras en porte-à-faux (7), un moyen d'entraînement (28) et un tampon ajustable (19), destiné à faire pivoter le bras en porte-à-faux (7) en une position réglable au moyen du tampon (29), dans laquelle l'axe du talon (17) porté par le support (8, 9) coïncide avec celui du tambour de construction (2).

3. Appareil selon la revendication 1 ou 2, caractérisé en ce que chacune des deux unités de positionnement (4, 5) comporte un chariot (22) supporté de façon déplaçable sur la piste de transfert (1) , ladite piste (1) s'étendant parallèlement à l'axe du tambour de construction (2) et ce que des moteurs d'entraînement avec un équipement de commande électronique sont prévus pour déplacer chaque unité de positionnement (4, 5) par rapport au tambour de construction (2).

4. Appareil selon la revendication 1, caractérisé en ce que les deux bras (23, 24) situés sur chaque unité de positionnement (4, 5) peuvent être échangés pour des bras présentant un rayon d'arc différent.

5. Appareil selon l'une des revendications précédentes, caractérisé en ce que chaque support (8, 9) est pourvu d'au moins deux crochets (15) destinés à suspendre des talons sur eux, dans la position de réception, avec des tiges de poussée (18) destinées à pousser le talon (17) vers et contre l'unité de position (4, 5) en question, et avec un moteur d'entraînement destiné à faire pivoter les crochets (15) en une position dans laquelle le talon (17) est relâché et pour, simultanément, pousser les tiges de poussée (18), avec les talons (17), en direction de l'unité de positionnement (4, 5) en question.

6. Appareil selon la revendication 5, caractérisé en ce que chaque support (8, 9) comprend un élément support (12) et un nombre déterminé de cames de centrage (14) sur lesquels les tiges de poussées (18) sont montées, au moins deux des cames de centrage (14) les plus élevées comprenant lesdits crochets pivotant (15).

7. Appareil selon la revendication 5, caractérisé en ce que les cames de centrage (14) sont montées sur l'élément support (12) de manière qu'elles puissent être échangées pour des cames de centrage (14) d'une taille différente, de manière à les adapter au diamètre du talon (17).

8. Appareil selon l'une des revendications précédentes, caractérisé en ce qu'après que les talons (17) aient été positionnées sur le tambour de construction (2), il est possible d'avoir un libre accès depuis un côté à la piste de transfert (1), du fait que le bras en-porte-faux (7) se trouve à sa position la plus élevée, et les deux chariots (22) avec les supports (8, 9) et les unités de positionnement (4, 5) étant situées dans la position la plus élevée et les deux chariots (22) avec les supports (8, 9) et les unités de positionnement (4,5) étant situées dans la position la plus élevée sur la piste de transfert (1), sur des côtés mutuellement opposés.
